# EUROPEAN PATENT APPLICATION

(11) **EP 3 474 202 A1**
(43) Date of publication of application: **24.04.2019**
(21) Application number: 18200659.3
(22) Date of filing: 16.10.2018
(51) Int. Cl.: G06Q 10/06

(54) **VEHICLE RIDE SHARE ASSIST SYSTEM**

(30) Priority: 18.10.2017 JP 2017201715
(71) Applicant: HONDA MOTOR CO., LTD., Tokyo 107-8556 (JP)
(72) Inventor: TANABE, Hiroyuki, Wako-shi, Saitama 351-0193 (JP); SAITO, Yuji, Wako-shi, Saitama 351-0193 (JP); MATSUSHIMA, Kuniaki, Wako-shi, Saitama 351-0193 (JP); KIMURA, Toru, Wako-shi, Saitama 351-0193 (JP)
(74) Representative: Weickmann & Weickmann PartmbB

(57) **Abstract**

A ride share assist system includes a host server including a user acknowledge receiving unit (42) configured to receive an intent confirmation message from each user terminal, and determine if the intent confirmation message is received before a prescribed deadline time defined for each user as a time point preceding the corresponding scheduled boarding time by a prescribed time period. If the intent confirmation message is not received from any one of the user terminals by the user acknowledge receiving unit (42) before the deadline time, the corresponding ride share application is canceled.

## Description

### TECHNICAL FIELD

The present invention relates to a vehicle ride share assist system for assisting a plurality of users in sharing vehicle rides.

### BACKGROUND ART

A known vehicle ride share assist system matches a driver of a vehicle with persons desiring to share a ride of the vehicle. JP2002-140399A discloses a vehicle ride share assist system that includes a means for receiving driving schedule information including a departure place, a destination, and a departure time transmitted from each of driver terminals, a means for receiving ride share information including the current position, a desired destination and a desired time of arrival from each of passenger terminals, a means for finding a combination of the driver and the passenger whose desires match each other by comparing the plurality of pieces of driving schedule information and the plurality of pieces of ride share information, a means for transmitting rendezvous information including a rendezvous time and a rendezvous point to the driver terminal and the passenger terminal related to the matched combination, and a means for recording completion of ride share when such information is notified from each of the driver terminal and the passenger terminal.

This vehicle ride share assist system further includes a means for receiving the current position of the driver from the driver terminal, a means for acquiring traffic information of the road, a means for predicting a rendezvous time at which the driver is expected to arrive at a rendezvous point according to the current position of the driver, the traffic information, and driving schedule information, and a means for transmitting the predicted rendezvous time to the corresponding passenger terminal. Thereby, the passenger can know the exact rendezvous time on a real time basis.

In the prior art disclosed in JP2011-237842A, an arrangement is made to determine if each particular user carrying a user terminal is currently sharing a ride by determining if the distance between the user terminal and the vehicle terminal (driver terminal) is within a prescribed value, and the traveling speed difference between the user terminal and the vehicle terminal is within a prescribed value.

However, according to the conventional vehicle ride share assist systems, if a passenger fails to arrive at the rendezvous point by the rendezvous time, the driver of the vehicle has to either wait until the passenger arrives or depart from the rendezvous point without picking up the expected passenger to keep the driving schedule. If the driver chooses to wait for the passenger, the subsequent driving schedule is disturbed, and the ride share operation is hindered. Even if the driver leaves the rendezvous point without the intended passenger, the vehicle still had to make an unnecessary trip to the rendezvous point, and this causes an unnecessary delay for the vehicle operation. Also, if the driver could not make a departure with the vehicle by the scheduled departure time, this also hinders smooth execution of the ride share operation.

### SUMMARY OF THE INVENTION

In view of such problems of the prior art, a primary object of the present invention is to provide a vehicle ride share assist system that can assist smooth ride share operation even when a user using the ride share service cannot arrive at a scheduled boarding point (scheduled departure point or scheduled pick up point) by a scheduled boarding time (scheduled departure time or scheduled pick up time).

To achieve such an object, the present invention provides a vehicle ride share assist system (1) comprising a plurality of user terminals (2) and a host server (4) connected to the user terminals via a network (3), wherein each of the user terminals includes an application input unit (12) configured to allow a corresponding user to enter a ride share application including at least a desired boarding point and to transmit the ride share application to the host server, wherein the host server includes: an application processing unit (22) configured to accept the ride share applications transmitted from the user terminals; an operation scheduling unit (24) configured to create a ride share group of users for each vehicle for ride share, the ride share group including a designated driver and passengers, and to create an operation schedule for each ride share group, the operation schedule including a scheduled boarding point and a scheduled boarding time of each user; and a schedule notifying unit (41) configured to notify the operation schedule related to each user to the corresponding user terminal, wherein each of the user terminals further includes an intent input unit (34) configured to allow the corresponding user to acknowledge an intent to follow the operation schedule by transmitting an intent confirmation message to the host server, and wherein the host server further includes a user acknowledge receiving unit (42) configured to receive the intent confirmation messages from the user terminals, and determine if the intent confirmation message is received before a prescribed deadline time defined for each user as a time point preceding the corresponding scheduled boarding time by a prescribed time period.

According to the above arrangement, by determining if the intent confirmation message is received from each user terminal before the prescribed deadline time, it is possible to confirm whether a smooth ride share operation is possible, and to take necessary measures to assist the smooth ride share operation depending on the result of the confirmation.

Preferably, the user acknowledge receiving unit (42) is configured to notify the deadline time for each user to the corresponding user terminal.

Thereby, the users are prompted to acknowledge the intent to follow the schedule by the deadline time, and to follow the schedule in a timely fashion, whereby the ride share operation is performed smoothly. This is particularly effective in a case where there is a long time between the time of transmitting the ride share application to the designated (scheduled) boarding time.

According to a preferred embodiment of the present invention, if the intent confirmation message is not received from any one of the user terminals by the user acknowledge receiving unit (42) before the deadline time, the user acknowledge receiving unit (42) is configured to cancel the corresponding ride share application, the operation scheduling unit (24) is configured to revise the operation schedule by taking into account the canceled ride share application, and the schedule notifying unit (41) is configured to notify a revised operation schedule to the user terminals (2) of the users related to the revised operation schedule.

By canceling the application of the user who is unlikely to show up on time at the scheduled boarding point, the operation schedule can be timely changed so that the inconvenience to the other users of the same group can be minimized.

Preferably, if the intent confirmation message is not received from any one of the user terminals by the user acknowledge receiving unit (42) before the deadline time, the user acknowledge receiving unit (42) is configured to revise the deadline time of each user related to the revised operation schedule, and the schedule notifying unit (41) is configured to notify the revised deadline times to the user terminals (2) of such users.

Thereby, the user acknowledge receiving unit can confirm the intent of each remaining user to follow the schedule at the deadline time revised to be in conformity with the revised operation schedule, and therefore, can confirm whether the ride share operation can be performed smoothly at an appropriate time.

Preferably, the host server (4) further includes an operation status notification unit (44) configured to notify reception of the intent confirmation message from the user terminal of any user and cancelation of the ride share application of any user to the user terminals of the users of the same ride share group.

Thereby, the users can be kept informed of the status of the ride share operation on a real time basis so that the users can participate in the ride share in a comfortable manner.

Preferably, the host server (4) further includes a schedule following status confirmation unit (43) configured to confirm a schedule following status of each user according to position information of the corresponding user terminal, and the operation status notification unit (44) is configured to notify the confirmed schedule following status to the user terminals of the users of the same ride share group.

Thereby, it is possible to confirm the schedule following status of each user from the actual position of the relevant user terminal, without solely relying on the acknowledgement of intent to follow the schedule transmitted from the user terminal or without requiring the user to take an extra action. In addition, because the schedule following status of each user is notified to the other users, a concern of the users participating in the ride share can be reduced.

Preferably, when a user has failed to show up at the corresponding scheduled boarding point at the corresponding scheduled boarding time, the user terminals (2) of the remaining users of the same ride share group are each configured to transmit a decision to leave the boarding point without picking up the user who failed to show up at the corresponding boarding point to the host server (4).

Thereby, the host server is kept informed of the status of the operation schedule, and may change the schedule if needed in a timely fashion.

Preferably, when a user has failed to show up at the corresponding scheduled boarding point at the corresponding scheduled boarding time, the host server (4) is configured to inform a position of the user who failed to show up at the corresponding scheduled boarding point to the user terminals (2) of the remaining users of the same ride share group

Thereby, the users of the same ride share group can decide to wait for the user who has failed to timely show up at the pick up point (boarding point) or leave the pick up point without waiting for this user in a rational manner so that the convenience of the ride share can be enhanced.

Preferably, the application input unit (12) is configured to allow the user to enter a change application for changing contents of an existing ride share application and to transmit the change application to the host server (4), the application processing unit (22) is configured to receive the change application, and the operation scheduling unit (24) is configured to revise the operation schedule according to the received change application.

Thereby, the operation scheduling can be performed in a flexible manner so that the convenience for the users can be enhanced.

Preferably, the host server (4) further includes a vehicle information managing unit (27) configured to store and manage information of a fleet of registered vehicles, and a user information managing unit (26) configured to store and manage information on registered users including potential drivers, and the operation scheduling unit (24) is configured to create and revise the operation schedule by selecting a vehicle satisfying ride share vehicle conditions from among the registered vehicles and a user satisfying driver conditions from among the registered users according to the information stored in the vehicle information managing unit and the user information managing unit.

Thereby, the operation schedule can be created or revised taking into account the information of the registered vehicles (such as statutory inspection result, etc.) and information of the registered users (such as possession of the driver's license, physical condition, etc.), whereby an appropriate ride share operation can be performed.

Preferably, the user acknowledge receiving unit (42) is configured to add history information to the user information stored in the user information managing unit (26) for the user who failed to transmit the intent confirmation message before the prescribed deadline time, and the host server (4) is further provided with a guidance notifying unit (45) configured to notify to the user terminal of the user who failed to transmit the intent confirmation message a guidance that guides a procedure for transmitting a change application for changing contents of an existing ride share application.

Thereby, the user who failed to transmit the intent confirmation message is prompted to make changes to the ride share application in a timely fashion, so that the schedule is revised at an appropriate time and the ride share can be performed smoothly.

The vehicle ride share assist system according to the present invention can assist smooth ride share operation even when a user using the ride share service fails to arrive at a scheduled boarding point by a scheduled boarding time.

### BRIEF DESCRIPTION OF THE DRAWING(S)

Figure 1 is a block diagram of a vehicle ride share assist system according to an embodiment of the present invention;
Figure 2 is an explanatory diagram of screens that can be displayed on a user interface shown in Figure 1;
Figure 3 is a block diagram showing the details of a ride share information managing unit shown in Figure 1; and
Figure 4 is a flowchart showing a control flow of a ride share assist process executed by a host server in the vehicle ride share assist system.

### DETAILED DESCRIPTION OF THE INVENTION

In the following, a vehicle ride share assist system 1 according to an embodiment of the present invention is described with reference to the appended drawings. This vehicle ride share assist system 1 is, not exclusively, suited to provide a transportation service to a group of people (users) belonging to a particular group such as a business, a government office, a sports club, a nursing home, a shopping center, etc. Typically, the system provides a vehicle ride share service to a workplace or any other facility from the homes of the users, and back to their homes from the workplace or the like.

The participants or the users of the vehicle ride share assist system 1 according to the present embodiment share a plurality of vehicles. Such vehicles may be owned by an entity such as a business to which the users belong, may be owned by some of the members of the group (users), or may be a mixture of such vehicles. These vehicles are all registered in the vehicle ride share assist system 1, and are appropriately assigned unique identification numbers. Also, in the vehicle ride share assist system 1, all users are assigned unique user identification numbers.

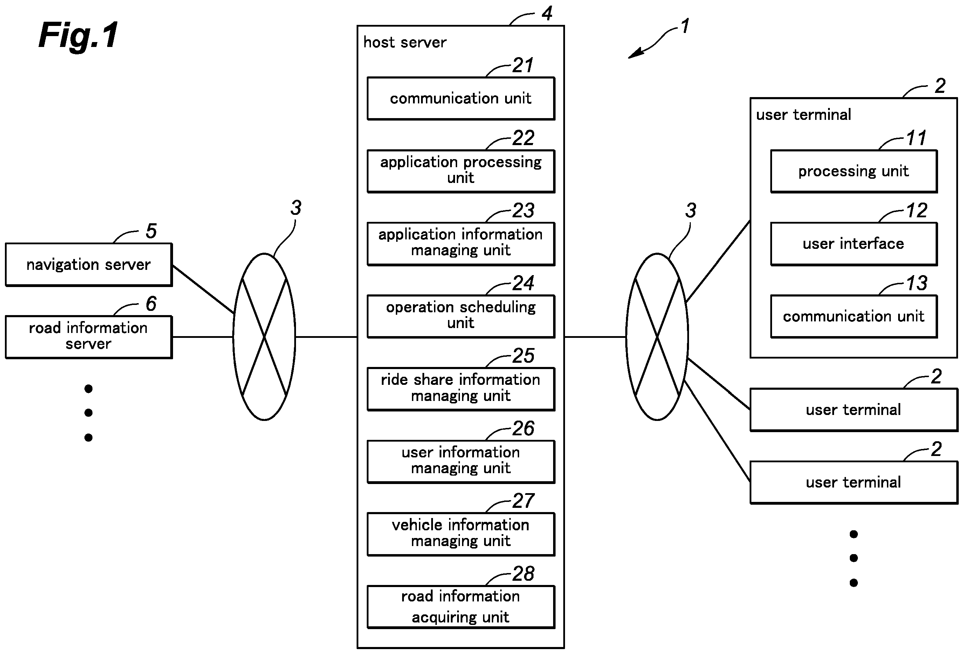

As shown in Figure 1, the vehicle ride share assist system 1 includes a plurality of user terminals 2 and a host server 4 connected to the respective user terminals 2 via a network 3. Each user terminal 2 is carried by the corresponding user, and the host server 4 is provided in a fixed location such as a building of a business or the like which operates the vehicle ride share assist system 1. The network 3 may consist of any wireless communication network, such as the Internet.

Each user terminal 2 includes a processing unit 11 for executing an application software, a user interface 12 for displaying an input screen for receiving an input operation from the user as well as information screens for providing information to the user, and a communication unit 13 for communicating with the host server 4 via the network 3. The user terminal 2 may consist of a smartphone, a tablet PC, a cell phone, a PDA, or the like. The user terminal 2 operates according to application software executed by the processing unit 11, and displays various screens on the user interface 12 as will be described later.

The host server 4 includes a communication unit 21 for communicating with the user terminals 2 via the network 3, an application processing unit 22 for accepting a ride share application from the users, an application information managing unit 23 for storing and managing application information of the users who desire to share a ride, an operation scheduling unit 24 for creating a plurality of groups of users from those who have applied for a ride share, determining a route for each group by using an external navigation server 5, and creating an operation schedule for each group, a ride share information managing unit 25 for storing and managing the created ride share groups and operation schedules, a user information managing unit 26 for storing and managing user information of the registered users, a vehicle information managing unit 27 for storing and managing information on the registered vehicles, and a road information acquiring unit 28 for acquiring information on the traffic condition of the roads by using an external road information server 6.

The user information managing unit 26 stores user information for each user, such as the user identification number, the user's name, the address, the driving skill level, the driver's license expiration date, the traffic violation history, the number of traffic violation points, the past driver duty performance records, the identification number of the vehicle provided by the user (a private vehicle registered for use in the ride share), the self-declared physical condition, the ride share history, etc. Further, the user information managing unit 26 stores the driver conditions that are required to be satisfied for the users to be selected as the drivers of the ride share.

The vehicle information managing unit 27 stores vehicle information for each vehicle such as the vehicle identification number, the vehicle type, the occupant capacity, the fuel mileage, the CO₂ emission amount, the vehicle inspection expiration date, the statutory inspection history, the statutory inspection result, the past use history, etc. Further, the vehicle information managing unit 27 stores the ride share vehicle conditions that are required for the vehicles to be selected for the ride share.

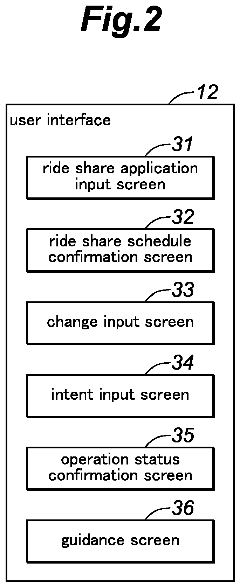

Figure 2 is an explanatory diagram of screens that can be displayed on the user interface 12. A ride share application input screen 31 is a screen to be displayed from a home screen by the user when the user wants to apply for a ride share. The ride share application input screen 31 allows the user to enter a ride share application. Therefore, the ride share application input screen 31 (or the user interface 12) serves as an application input unit for allowing the user to enter a ride share application.

On the ride share application input screen 31, the user selects either a ride to the workplace or a ride back to the home. When a ride to the workplace is selected, the ride share application input screen 31 requires such information as the user identification number, the desired boarding point (departure point or pick up point), the destination, the desired arrival time, and the vehicle that can be offered by the user to be entered. When a ride back to the home is selected, the ride share application input screen 31 requires such information as the user identification number, the desired boarding point, the desired boarding time (departure time or pick up time), the desired destination, and the vehicle that can be offered by the user to be entered.

Once the user enters a ride share application on the ride share application input screen 31 of the user interface 12, the ride share application is transmitted from the user terminal 2 to the host server 4 shown in Figure 1. In the host server 4, the application processing unit 22 accepts the ride share application, and the application information managing unit 23 stores the ride share application. For example, the application information managing unit 23 may start accepting ride share applications a week in advance of the day of sharing the ride, and end accepting the ride share applications at noon of the day preceding the day of sharing the ride.

Once the acceptance of the ride share applications is ended, the operation scheduling unit 24 designates groups of users each including a driver and one or more passengers who are going to share the vehicle, to thereby create ride share groups. The operation scheduling unit 24 also creates an operation schedule for each ride share group, the operation schedule including the boarding points (departure point and pick up points) for the users (the driver and the passengers) of each group, and the expected boarding times (the expected time of the initial departure and the expected times of picking up passengers) of the users.

When creating each ride share group, the operation scheduling unit 24 selects a vehicle that satisfies the ride share vehicle conditions from the vehicles stored in the vehicle information managing unit 27 and a user satisfying the driver conditions from the users stored in the user information managing unit 26. At this time, the operation scheduling unit 24 takes into account the various conditions of the vehicles (such as the statutory inspection result, etc.) and the various conditions of the users (such as possession of the driver's license, physical condition, etc.). This enables the operation scheduling unit 24 to create an appropriate operation schedule that may be executed smoothly. The operation scheduling unit 24 also determines the pick up point (boarding point) for each user, which may be the user's desired pick up point or a point near the user's desired pick up point that is convenient for the vehicle to pick up the user.

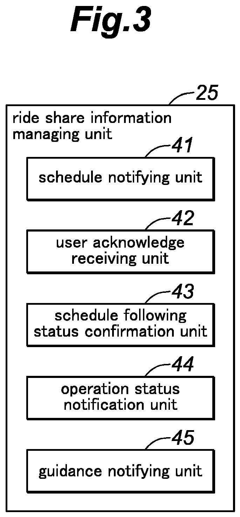

Figure 3 is a block diagram showing the details of the ride share information managing unit 25. As shown in Figure 3, the ride share information managing unit 25 is provided with a user acknowledge receiving unit 42 that determines a prescribed deadline time by which each user is required to acknowledge his or her intent to actually follow the schedule. This deadline time is determined as a time point preceding the corresponding scheduled boarding time, which is set for each user, by a prescribed time period.

For example, the prescribed time period may be 5 minutes or 10 minutes. The prescribed time period may be varied depending on the distance between the boarding point designated by the user and the boarding point designated by the host server 4 (operation scheduling unit 24) and/or the distance between the address of the user and the boarding point designated by the host server 4, and/or depending on if the user is the driver or the passenger. For instance, the user acknowledge receiving unit 42 may set the deadline time only a short time (e.g., 5 minutes) before the boarding time if the boarding point designated by the user coincides with the boarding point designated by the host server 4, and otherwise set the deadline time a longer time before the boarding time, for instance, in proportion to the distance between the boarding point designated by the user and the boarding point designated by the host server 4 (for example, the prescribed time period may be 5 minutes plus a time required to walk from the boarding point designated by the user to the boarding point designated by the host server 4).

The ride share information managing unit 25 includes a schedule notifying unit 41 that notifies the operation schedule created by the operation scheduling unit 24 and the deadline time set by the user acknowledge receiving unit 42 to the user terminal 2 of each user as a user schedule which may be considered as a part of the overall operation schedule. The user schedule that is notified by the schedule notifying unit 41 to each user may include the vehicle information, the user information of the driver, the route, the names of the users in the ride share group, and the boarding points and boarding times of the respective users.

The operation schedule and the deadline times that are notified by the schedule notifying unit 41 are displayed on a ride share schedule confirmation screen 32 of the user interface 12 as shown in Figure 2. Each user is thereby enabled to confirm the contents of the operation schedule and the deadline time.

After a ride share application is made, the user may want to make a change in the contents of the ride share application (such as the desired boarding time) or may want to cancel the ride share application depending on the changes of the conditions. To meet such a need, the user interface 12 is configured such that a change input screen 33 may be selected by the user so that the user may enter the desired change or cancel the ride share application. Thus, the user interface 12 (or the change input scree 33) is configured to allow the user to enter a change application for changing contents of an existing ride share application.

When the user has entered the desired change on the change input screen 33 of the user interface 12, the entered change is transmitted from the user terminal 2 to the host computer 4 as a change application. Similarly as in the case of initially applying for a ride, in the host computer 4, the change application is received by the application processing unit 22, and is stored in the application information managing unit 23. The operation scheduling unit 24 then makes corresponding changes in the operation schedule and the deadline time related to the user who has requested the change. If such a change is requested too close to the start of the operation, other users will be unduly inconvenienced. Therefore, the application processing unit 22 may prohibit a change or a cancelation to be entered some time ahead of the start of the operation such as by a certain evening time of the previous day.

When a change in the contents of the ride share application is requested, the operation scheduling unit 24 makes the corresponding changes in the operation schedule of one ore more ride share vehicles, typically immediately after stopping to accept any request for a change. For instance, the user who requested the change may be assigned to a different vehicle and the related operation schedules are changed accordingly, so that the operation schedules may be disturbed to a minimum extent.

The schedule notifying unit 41 of the ride share information managing unit 25 notifies the revised operation schedule to the user terminals 2 of the related users. The operation schedule based on the revised operation schedule is displayed on the ride share schedule confirmation screen 32 of each user interface 12 shown in Figure 2.

Even when a ride share application is made or a change in the contents of the ride share application is requested by a user, it is still possible that the user may fail to show up at the boarding point without prior notice to the host server 4 due to oversleeping or sudden illness, for example. In such a case, a user designated as the driver may become unable to make a departure with the designated vehicle by the scheduled departure time or a user designated as a passenger may be unable to arrive at the scheduled boarding point by the scheduled boarding time, whereby a significant disturbance may be caused to the operation schedule. To cope with such an eventuality, the user acknowledge receiving unit 42 of the ride share information managing unit 25 notifies to each user terminal 2 the relevant deadline time at a time preceding the deadline time by a prescribed time period (typically 30 to 60 minutes).

The deadline time transmitted from the host server 4 is displayed on an intent input screen 34 of the user interface 12 shown in Figure 2. In this manner, the user acknowledge receiving unit 42 notifies the deadline time to the user terminal 2 before the deadline time, to thereby help the user to timely follow the operation schedule (such as showing up at the scheduled boarding point at the scheduled boarding time). This also serves as a reminder to the user who has made the ride share application some time ago.

When the user makes an input operation on the intent input screen 34 indicating an intent to follow the schedule, the communication unit 13 of the user terminal 2 transmits the intent, which may be referred to as an intent confirmation message, to the host server 4. The user acknowledge receiving unit 42 shown in Figure 3 confirms that a user has the intent to follow the schedule by receiving the intent confirmation message from the corresponding user terminal 2 via the communication unit 21 before the deadline time.

On the other hand, even though the user acknowledge receiving unit 42 notified the deadline time to the user terminal 2, the intent to follow the schedule (or intent confirmation message) may not be transmitted from the user terminal 2 by the deadline time so that the user acknowledge receiving unit 42 may not be able to confirm the user's intent to follow the schedule by the deadline time. In such a case, to enable the ride share operation to be performed smoothly, the user acknowledge receiving unit 42 cancels the ride share application of the user whose intent to follow the schedule could not be confirmed, and the operation scheduling unit 24 (Figure 1) revises the operation schedule accordingly. If the user whose ride share application is canceled happens to be the driver, the operation scheduling unit 24 selects another user who satisfies the driver conditions (namely, who is qualified as the driver) from the users stored in the user information managing unit 26, and selects a vehicle satisfying the ride share vehicle conditions from the vehicles stored in the vehicle information managing unit 27, and revises the operation schedule accordingly. By making arrangement such that the cancelation takes place well in advance of the start of the scheduled operation, the revision of the scheduled operation can be performed in a timely fashion.

Once the operation scheduling unit 24 has revised the operation schedule in response to the cancellation of the ride share application, the user acknowledge receiving unit 42 revises the deadline times according to the scheduled boarding times of the revised operation schedule. The schedule notifying unit 41 notifies the revised operation schedule and deadline times to the user terminals 2 of the relevant users. The notified operation schedule and deadline time for each user are displayed on the ride share schedule confirmation screen 32 of the user interface 12. As a result, even if any of the users should fail to acknowledge the intent to follow the schedule before the deadline time, the operation schedule can be revised in a timely manner so that the other users are prevented from being unduly inconvenienced. With regard to the revised operation schedule also, the user acknowledge receiving unit 42 allows the user's intent to follow the schedule to be acknowledged before the newly defined deadline time for each user.

The acknowledgement of intent to follow the schedule and the cancelation of the ride share application (which may be deliberately made by the user or may be made as a result of a failure to timely acknowledge the intent to follow the schedule) are highly relevant for the operation schedule. Therefore, the ride share information managing unit 25 shown in Figure 3 is provided with an operation status notification unit 44 for notifying the confirmation of the intent to follow the schedule and the cancellation of the ride share application made by any user to the user terminals 2 of the other users of the same group. These pieces of information notified by the operation status notification unit 44 are displayed on an operation status confirmation screen 35 of the user interface 12 shown in Figure 2. Thereby, each user can know the status of the operation schedule relevant to the user on a real time basis so that the user can participate in the ride share in a comfortable manner.

Even when the user has made the input operation to acknowledge the intent to follow the schedule on the intent input screen 34 and the user acknowledge receiving unit 42 has received the acknowledgment of the intent (intent confirmation message) from the user terminal 2, the user may still fail to show up at the scheduled boarding point by the scheduled boarding time for any reason. Therefore, the ride share information managing unit 25 shown in Figure 3 is provided with a schedule following status confirmation unit 43 that, after receiving the intent confirmation message from a certain user terminal 2, obtains the position information of the user terminal 2, and confirms the schedule following status of the relevant user, namely, whether or not the relevant user is timely following or has followed the schedule, based on the obtained position information.

The schedule following status confirmation unit 43 regards the position of the user terminal 2 of the user designated as a driver as the position of the corresponding vehicle, and confirms the schedule following status of the driver, namely, judges whether or not the driver of the vehicle is fulfilling the duty of the driver (the vehicle is operating as expected) by determining whether or not the vehicle departed the original point (such as the home of the driver or the car park where the ride share vehicles are parked when not in use) at the scheduled departure time, and/or whether the vehicle is traveling the planned route as scheduled. In the case whether the user is a passenger, the schedule following status confirmation unit 43 confirms the schedule following status of the user by determining if the user is moving such that he or she can reach the scheduled boarding point by the scheduled boarding time according to the position information of the user terminal 2 of the user. Also, the schedule following status confirmation unit 43 can judge that the user has boarded the vehicle if the user terminal 2 of the user is moving with the vehicle (or with the user terminal 2 of the driver). The schedule following status confirmation unit 43 may check the status of each user (who may be a passenger or the driver) at an appropriate timing after receiving the acknowledgement of intent (intent confirmation message), or at appropriate time intervals after receiving the acknowledgement of intent (intent confirmation message) while the ride share operation is in progress. Thereby, the schedule following status confirmation unit 43 can confirm the schedule following status of each user from the actual position of the relevant user terminal 2, without solely relying on the acknowledgement of intent to follow the schedule transmitted from the user terminal 2 or without requiring the user to take an extra action.

Once the schedule following status confirmation unit 43 has confirmed the schedule following status of each user, the operation status notification unit 44 notifies the confirmed schedule following status to the user terminals 2 of the users belonging to the corresponding group. The schedule following statuses of the users of the group notified by the operation status notification unit 44 are displayed on the operation status confirmation screen 35 of the user interface 12 shown in Figure 2. Therefore, each user is informed of the entire status of the operation schedule both timely and clearly so that the user is enabled to participate in the ride share in a comfortable manner. The operation status notification unit 44 may be configured to send the latest status of each user to the user terminal 2 in response to a request sent from the user terminal 2 such that the latest status is displayed on the operation status confirmation screen 35.

As described above, when the user acknowledge receiving unit 42 could not confirm the intent of a user to follow the schedule before the deadline time, the relevant operation schedule is revised by the operation scheduling unit 24 immediately before or even during the ride share operation, so that the other users may be required to change their schedules on the day of the ride share at least to a certain extent. Also, such an incident hinders smooth ride share operation and reduces the trust of the users in the ride share assist service. It is therefore fair to penalize the user who has failed to duly acknowledge the intent to follow the schedule. Therefore, the user acknowledge receiving unit 42 is configured to add history information indicating the incidence of failing to acknowledge the intent to follow the schedule by the deadline time to the user information of the user stored in the user information managing unit 26. Such undesired incidence may be used as a reason for an extra charge to the relevant user, or for a lower priority in finding a suitable vehicle for the user in the ride share.

Similarly, when the schedule following status confirmation unit 43 has detected a delay in boarding the vehicle according to the schedule by one of the users (or when the user showed up at the boarding point later than expected) even though the user acknowledge receiving unit 42 has received the user's intent to follow the schedule, the other users will be inconvenienced by the resulting delay of the operation of the vehicle. Therefore, the schedule following status confirmation unit 43 is configured to add history information indicating the incidence of failing to timely follow the schedule to the user information of the user stored in the user information managing unit 26 in such a case also. Such undesired incidence may be used as a reason for an extra charge to the relevant user, or for a lower priority in finding a suitable vehicle for the user in the ride share.

The host server 4 is provided with a guidance notifying unit 45 for sending to the user terminal 2 of the user who failed to acknowledge the intent to follow the schedule a guidance of the procedure for making changes in the ride share application (or for entering a change application for changing contents of the existing ride share application), and sending to the user terminal 2 of the user who failed to timely follow the schedule a guidance for prompting the user to timely follow the schedule, such that the guidance is displayed on a guidance screen 36 of the user interface 12 shown in Figure 2. Thereby, the user may be prompted to make changes to the application or to timely follow the schedule.

As described above, in the vehicle ride share assist system 1 according to the illustrated embodiment, the user acknowledge receiving unit 42 is configured to set the deadline time by which the user is required to acknowledge the intent to follow the schedule, such that the deadline time is set for each user as a time point preceding the scheduled boarding time of the user by a prescribed time period, and to confirm presence/absence of the acknowledge from each user at the deadline time. Thereby, the intent of the user can be established in advance of the actual boarding time with a high certainty. Therefore, the system can confirm whether the ride share operation can be executed smoothly in advance, and can take necessary measures to assist smooth ride share operation depending on the result of the confirmation.

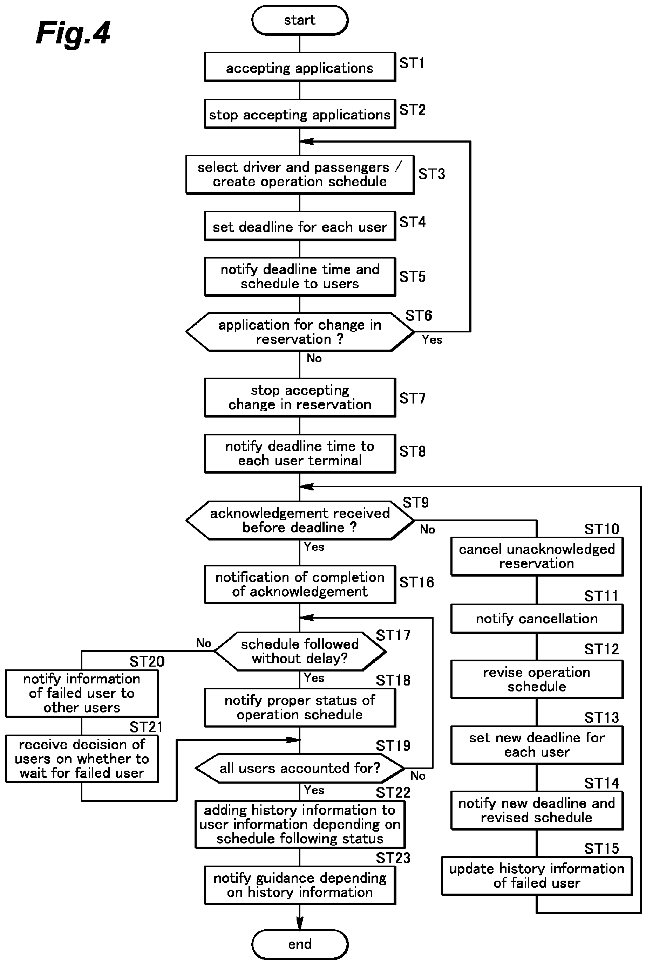

Next, the ride share assist process executed by the host server 4 of the vehicle ride share assist system 1 according to the present embodiment is described in the following with reference to the flowchart of Figure 4. In the following, the process that is executed for a single trip of the vehicle is described. However, in reality, each vehicle typically makes two trips (going to office, and coming home) each day, and repeats this process in every working day.

The application processing unit 22 starts accepting the applications for a ride share from the day preceding one week from the day of sharing the ride (step ST1), and stops accepting the applications at noon of the day immediately before the day of sharing the ride (step ST2). During this time period, the application processing unit 22 accepts applications for a ride share from the user terminals 2 of a plurality of registered users (members of a ride share group). Upon elapsing of the time period for accepting applications, the operation scheduling unit 24 creates ride share groups by selecting, for each ride share group, a vehicle, a driver and passengers to share the ride, and creates an operation schedule for each ride share group (step ST3). The user acknowledge receiving unit 42 sets the deadline time (5 minutes or 10 minutes before the scheduled boarding time, for instance) for each user (step ST4). The schedule notifying unit 41 notifies the operation schedule and the corresponding deadline time to each user terminal 2 (step ST5).

The application processing unit 22 determines if there is an application for a change of the ride share application at a predetermined timing (at a regular interval, such as once every hour, or a short time before the time limit for making a change in the application, for example) (step ST6), and if any request for a change has been made (Yes in step ST6), the process flow returns to step ST3 to reschedule the ride share operation. In step ST6, the system awaits the arrival of the time limit, e.g., a certain evening time of the day before the day of the ride share at the same time as detecting a request for making a change to the application. Upon arrival of the time limit, the application processing unit 22 stops accepting a change in the ride share application (Step ST7).

On the day of the scheduled ride share, the user acknowledge receiving unit 42 notifies to each user terminal 2 the relevant deadline time at a time preceding the deadline time by a prescribed time period (such as 30 minutes or one hour) (Step ST8). Each user is required to acknowledge the intent to follow the schedule before this deadline time. The user acknowledge receiving unit 42 determines if an acknowledgement of the intent to follow the schedule (intent confirmation message) has been received from each user terminal 2 before the corresponding deadline time (step ST9).

In step ST9, if the user acknowledge receiving unit 42 does not receive the acknowledgement of the intent to follow the schedule from any one of the user terminals 2 before the deadline time (No in step ST9), the operation scheduling unit 24 judges that the corresponding user does not intend to follow the schedule, and cancels the ride share application of this user (step ST10). The operation status notification unit 44 then notifies all the users of the same ride share group of this cancellation of the application (step ST11). Subsequently, the operation scheduling unit 24 revises the operation schedule by taking into account the cancellation (step ST12), and the user acknowledge receiving unit 42 revises the deadline times according to the revised operation schedule (step ST13). The schedule notifying unit 41 notifies the revised operation schedule along with the revised deadline time to each user terminal 2 of the same ride share group (step ST14). The schedule following status confirmation unit 43 adds the history information of the failure to acknowledge the intent to follow the schedule to the user information of the user who has failed to acknowledge the intent to follow the schedule (step ST15). The program flow then returns to step ST9.

The user acknowledge receiving unit 42 executes the determination process in step ST9 for each user, and if there is a user who has failed to acknowledge the intent to follow the schedule from the user terminal 2 before the deadline time (No in step ST9), the process of steps ST10 to ST15 is repeated.

If it is determined in step ST9 that the acknowledgements of the intent to follow the schedule have been received from all of the user terminals 2 before the respective deadline times (Yes in step ST9), the operation status notification unit 44 notifies to all of the users of the ride share group that the acknowledgement of the intent to follow the schedule has been completed (Step ST16). After all of the intents to take follow the schedule are acknowledged, the schedule following status confirmation unit 43 determines the schedule following status of each user or whether each user is acting to follow the schedule without delay (step ST17).

If it is determined in step ST17 that any of the users is properly following or has properly followed the schedule and boarded the vehicle, the operation status notification unit 44 notifies the proper schedule following status to all the users of the same ride share group (step ST18), and the program flow advances to step ST19. In step ST19, it is determined if all of the users have been accounted for (namely, if all of the users to board the vehicle have boarded the vehicle), and if not, the program flow returns to step ST17.

If it is determined in step ST17 that any of the users has failed to board the vehicle before the scheduled boarding time (namely, there is a delay in following the schedule by the user), the ride share information managing unit 25 determines the location and movement of the failed user according to the position information of the user terminal 2 of this user, and determines if the user is coming to the boarding point at all and, if so, how long it will take for the user to reach the boarding point. This information is transmitted to the user terminals 2 of the other users of the same group (step ST20) and the ride share information managing unit 25 awaits for a response from the user terminals 2.

The users in the corresponding group then decide if the group will wait for the failed user or leave the boarding point without picking up the failed user, and transmit the decision to the ride share information managing unit 25 so that the ride share information managing unit 25 receives the decision (step ST21), and the program flow advances to step ST19. It is also possible to do away with the need to communicate the decision because the ride share information managing unit 25 is able to determine the status of this particular boarding from the position information of the relevant user terminals 2. If all of the users have been accounted for in step ST19, the user information managing unit 26 adds records (history information) to the user information stored in the user information managing unit 27 specifying how each user has contributed to (or not contributed to) the smooth operation of the ride share. Those users who followed the schedule as required are awarded good score, and those users who failed to properly follow the schedule are awarded bad scores depending on the severity of the failure (step 22).

Thereafter or at the same time, the host server 4 (guidance notifying unit 45) transmits a guidance to the user terminal 2 of some users if it is considered appropriate or necessary according to the history information of the users stored in the user information managing unit 27 (Step ST23). Specifically, the host server 4 transmits to the user terminal 2 of the user who failed to acknowledge the intent to follow the schedule a guidance of the procedure for making changes in the application, and transmits to the user terminal 2 of the user who failed to properly follow the schedule a guidance for prompting the user to properly follow the schedule, such that the guidance is displayed on the guidance screen 36 shown in Figure 2.

In this way, in the vehicle ride share assist system 1 according to the embodiment, the host server 4 sets the deadline time by which the user is required to acknowledge the intent to follow the schedule such that the deadline time is set for each user as a time point preceding the scheduled boarding time of the user by a prescribed time period (Step ST4, Step ST13), and confirms the presence / absence of the intent at the deadline time (step ST9). As a result, the host server 4 can confirm whether a smooth ride share operation is possible, and take necessary measures to assist the smooth ride share operation depending on the result of the confirmation.

Although the present invention has been described in terms of a specific embodiment, the disclosed embodiment is not intended to limit the present invention, but various modifications and substitutions of the various components of the present invention can be made without departing from the spirit of the present invention.

For instance, the vehicle ride share assist system 1 of the present invention is typically used for the commuting of employees or members of an organization, but may also be used for providing transportation to any body of registered users who desired to go to a place or a group of places.
A ride share assist system includes a host server including a user acknowledge receiving unit (42) configured to receive an intent confirmation message from each user terminal, and determine if the intent confirmation message is received before a prescribed deadline time defined for each user as a time point preceding the corresponding scheduled boarding time by a prescribed time period. If the intent confirmation message is not received from any one of the user terminals by the user acknowledge receiving unit (42) before the deadline time, the corresponding ride share application is canceled.

## Claims

1. A vehicle ride share assist system (1) comprising a plurality of user terminals (2) and a host server (4) connected to the user terminals via a network (3),
wherein each of the user terminals includes an application input unit (12) configured to allow a corresponding user to enter a ride share application including at least a desired boarding point and to transmit the ride share application to the host server,
wherein the host server includes:
an application processing unit (22) configured to accept the ride share applications transmitted from the user terminals;
an operation scheduling unit (24) configured to create a ride share group of users for each vehicle for ride share, the ride share group including a designated driver and passengers, and to create an operation schedule for each ride share group, the operation schedule including a scheduled boarding point and a scheduled boarding time of each user; and
a schedule notifying unit (41) configured to notify the operation schedule related to each user to the corresponding user terminal,
wherein each of the user terminals further includes an intent input unit (34) configured to allow the corresponding user to acknowledge an intent to follow the operation schedule by transmitting an intent confirmation to the host server,
and wherein the host server further includes a user acknowledge receiving unit (42) configured to receive the intent confirmation messages from the user terminals, and determine if the intent confirmation message is received before a prescribed deadline time defined for each user as a time point preceding the corresponding scheduled boarding time by a prescribed time period.

2. The vehicle ride share assist system according to claim 1, wherein the user acknowledge receiving unit (42) is configured to notify the deadline time for each user to the corresponding user terminal at a time preceding the deadline time by a prescribed time period.

3. The vehicle ride share assist system according to claim 1 or 2, wherein if the intent confirmation message is not received from any one of the user terminals by the user acknowledge receiving unit (42) before the deadline time, the user acknowledge receiving unit (42) is configured to cancel the corresponding ride share application, the operation scheduling unit (24) is configured to revise the operation schedule by taking into account the canceled ride share application, and the schedule notifying unit (41) is configured to notify a revised operation schedule to the user terminals (2) of the users related to the revised operation schedule.

4. The vehicle ride share assist system according to claim 3, wherein if the intent confirmation message is not received from any one of the user terminals by the user acknowledge receiving unit (42) before the deadline time, the user acknowledge receiving unit (42) is configured to revise the deadline time of each user related to the revised operation schedule, and the schedule notifying unit (41) is configured to notify the revised deadline times to the user terminals (2) of such users.

5. The vehicle ride share assist system according to claim 3 or 4, wherein the host server (4) further includes an operation status notification unit (44) configured to notify reception of the intent confirmation message from the user terminal of any user and cancelation of the ride share application of any user to the user terminals of the users of the same ride share group.

6. The vehicle ride share assist system according to claim 5, wherein the host server (4) further includes a schedule following status confirmation unit (43) configured to confirm a schedule following status of each user according to position information of the corresponding user terminal, and the operation status notification unit (44) is configured to notify the confirmed schedule following status to the user terminals of the users of the same ride share group.

7. The vehicle ride share assist system according to claim 6, wherein when a user has failed to show up at the corresponding scheduled boarding point at the corresponding scheduled boarding time, the user terminals (2) of the remaining users of the same ride share group are each configured to transmit a decision to leave the boarding point without picking up the user who failed to show up at the corresponding boarding point to the host server (4).

8. The vehicle ride share assist system according to claim 6, wherein when a user has failed to show up at the corresponding scheduled boarding point at the corresponding scheduled boarding time, the host server (4) is configured to inform a position of the user who failed to show up at the corresponding scheduled boarding point to the user terminals (2) of the remaining users of the same ride share group.

9. The vehicle ride share assist system according to any one of claims 3 to 8,
wherein the application input unit (12) is configured to allow the user to enter a change application for changing contents of an existing ride share application and to transmit the change application to the host server (4), the application processing unit (22) is configured to receive the change application, and the operation scheduling unit (24) is configured to revise the operation schedule according to the received change application.

10. The vehicle ride share assist system according to any one of claims 3 to 9, wherein the host server (4) further includes a vehicle information managing unit (27) configured to store and manage information of a fleet of registered vehicles, and a user information managing unit (26) configured to store and manage information on registered users including potential drivers, and the operation scheduling unit (24) is configured to create and revise the operation schedule by selecting a vehicle satisfying ride share vehicle conditions from among the registered vehicles and a user satisfying driver conditions from among the registered users according to the information stored in the vehicle information managing unit and the user information managing unit.

11. The vehicle ride share assist system according to claim 10, wherein the user acknowledge receiving unit (42) is configured to add history information to the user information stored in the user information managing unit (26) for the user who failed to transmit the intent confirmation message before the prescribed deadline time, and the host server (4) is further provided with a guidance notifying unit (45) configured to notify to the user terminal of the user who failed to transmit the intent confirmation message a guidance that guides a procedure for transmitting a change application for changing contents of an existing ride share application.
